# EUROPEAN PATENT SPECIFICATION

(11) **EP 2 755 406 B1**
(45) Date of publication and mention of the grant of the patent: **20.03.2019**
(21) Application number: 13194252.6
(22) Date of filing: 25.11.2013
(51) Int. Cl.: H04W 8/00, H04W 4/21, H04W 4/80, H04L 29/08

(54) **Method and apparatus for direct device to device discovery in a wireless communication system**
Verfahren und Vorrichtung für direkte Vorrichtung-zu-Vorrichtung-Erfassung in einem drahtlosen Kommunikationssystem
Procédé et appareil de découverte de dispositif à dispositif directe dans un système de communication sans fil

(30) Priority: 23.11.2012 US 201261729475 P
(43) Date of publication of application: 16.07.2014
(73) Proprietor: Innovative Sonic Corporation, Taipei City 11491 (TW)
(72) Inventor: Kuo, Richard Lee-Chee, Taipei City 11491 (TW)
(74) Representative: Hoefer & Partner Patentanwälte mbB

(56) References cited:
- US-A1- 2011 258 313
- US-A1- 2011 268 101
- "3rd Generation Partnership Project; Technical Specification Group SA; Feasibility Study for Proximity Services (ProSe) (Release 12)", 3GPP STANDARD; 3GPP TR 22.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V1.0.0, 12 September 2012 (2012-09-12), pages 1-33, XP050649061, [retrieved on 2012-09-12]

## Description

### CROSS-REFERENCE TO RELATED APPLICATIONS

The present Application claims the benefit of U.S. Provisional Patent Application Serial No. 61/729,475 filed on November 23, 2012. U.S. Provisional Patent Application Serial No. 61/729,475 discloses: Instead of explicitly including a UE identity in a proximity detection signal for restricted ProSe discovery, a potential way to improve user privacy is that UE1 generates the proximity detection signal using a UE1 specific parameter and this parameter is provided to UE2, which is permitted to discover UE2, beforehand for identifying UE1. In this situation, only those which have this information can identify UE1 from the received proximity detection signal using the UE1 specific parameter. Thus, good user privacy can be ensured.

Below is a description of the idea.
(1) UE 1 or the user of UE1 provides a list of friends, who are permitted to discover UE1, to the network.
   This may be done when UE1 activates the ProSe discovery feature or offline via internet.
(2) The network allocates a UE1 specific parameter to UE1, which is used by UE1 to generate the proximity detection signal.
   This may be done when UE1 activates the ProSe discovery feature or via over-the-air (OTA) device management. It is possible to update this parameter when necessary.
(3) The network provides the UE1 specific parameter to UE2, who is in the friend list of UE1. Together with the UE1 specific parameter, an identity of UE1 (e.g. the mobile phone number of UE1) should also be provided to UE2.
   This may be done when UE2 activates the ProSe discovery feature. Alternatively, an additional constraint for the network to provide the parameter may be considered i.e. if UE2 is close to UE1 (e.g. both are in the same cell or the same TA). This constraint can avoid unnecessary signaling.
   It is also possible for the network to do this via over-the-air (OTA) device management.
   The above three steps are supposed to be finished before ProSe discovery is performed.
(4) UE1 generates a proximity detection signal using the UE1 specific parameter and then transmits the signal.
   One potential method for generating the signal is: UE1 sets the content of the proximity detection signal and attaches a CRC. UE1 then scrambles the CRC with the UE1 specific parameter, just like PDCCH CRC scrambling with C-RNTI in LTE [8].
(5) UE2 processes the received proximity detection signal using the UE1 specific parameter to identify UE1. For example, UE2 de-scrambles the CRC of a received proximity detection signal using the UE1 specific parameter. If no CRC error is detected, the UE considers it successfully identifies UE1.

Furthermore, the proximity detection signal may contain a field of UE identity and this field may be set to a special value to indicate a restrict ProSe discovery. If this field is set to a value other than the special value, it is an open ProSe discovery and this field indicates the identity of the UE who transmits this signal.

### FIELD

This disclosure generally relates to wireless communication networks, and more particularly, to a method and apparatus for direct device to device discovery in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

US 2011/0258313 A1 describes techniques for performing network-assisted peer discovery to enable peer-to-peer (P2P) communication. In one design, a device registers with a network entity (e.g. a directory agent) so that the presence of the device and possibly other information about the device can be made known to the network entity. The network entity collects similar information from other devices. The device sends a request to the network entity, e.g. during or after registration. The request includes information used to match the device with other devices, e.g. information about service(s) provided by the device and/or service(s) requested by the device. The directory agent matches requests received from all devices, determines a match between the device and at least one other device, and sends a notification to perform peer discovery. The device performs peer discovery in response to receiving the notification from the network entity.

In view of this situation, it is the object underlying the present invention to provide methods and apparatus enabling direct device to device discovery in a wireless communication system.

### SUMMARY

Methods according to the present invention are defined in claims 1, 3 and 6, respectively. Devices according to the present invention are defined in claim 9, 10, and 11, respectively. Preferred embodiments thereof are respectively defined in the respective dependent claims.

A method and apparatus are disclosed coordinating restricted ProSe (Proximity-based Service) discovery using a proximity detection signal. The method includes a network receives a friends list from a first UE (User Equipment), wherein the friends list includes UEs that are permitted to discover the first UE. The method also includes the network allocates a UE-specific information for the first UE and provides the UE-specific information to the first UE so that the first UE could use the UE-specific information to generate the proximity detection signal. The method further includes the network delivers the UE-specific information of the first UE to a second UE in the friends list so that the second UE could use the UE-specific information to process the proximity detection signal to identify the first UE.

### BRIEF DESCRIPTION OF THE DRAWINGS

FIG. 1 shows a diagram of a wireless communication system according to one exemplary embodiment.
FIG. 2 is a block diagram bf a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a message sequence chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. SP-110638, "WID on Proposal for a study on Proximity-based Services"; TR 22.803-100, "Feasibility Study for Proximity Services (ProSe)"; and TS 36.213 V10.4.0 (2011-12), "E-UTRA Physical layer procedures." .

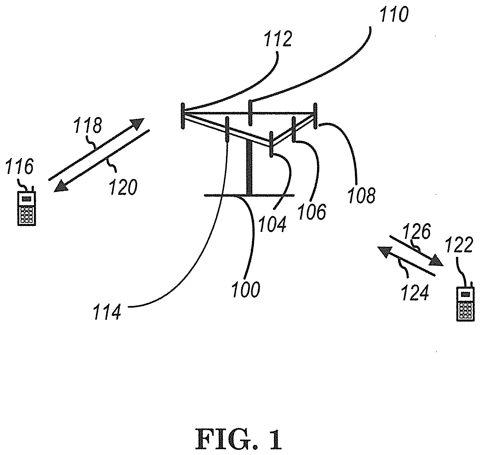

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

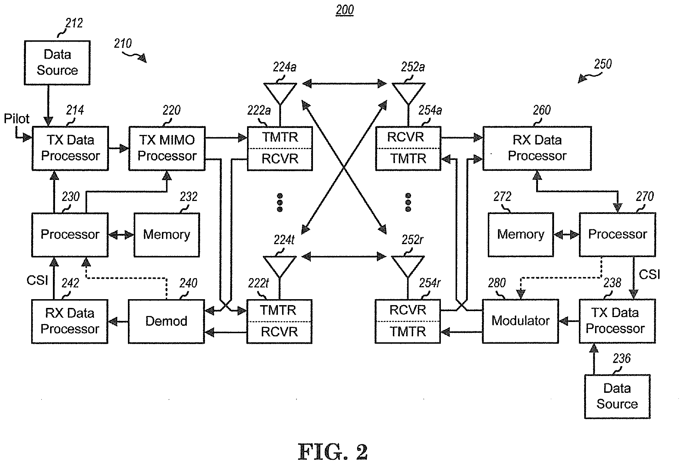

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

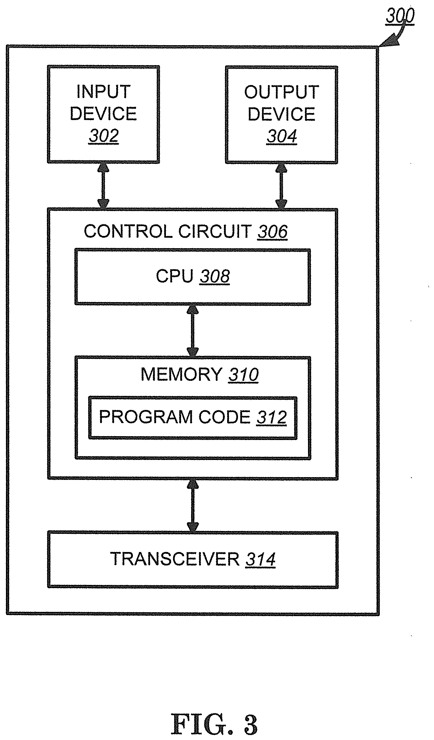

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the receiver system 250 in FIG. 2, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. Further, the communications device 300 can also be utilized for realizing the fixed station or base station (or AN) 100 in Fig. 1 or the transmitter system 210 in FIG. 2.

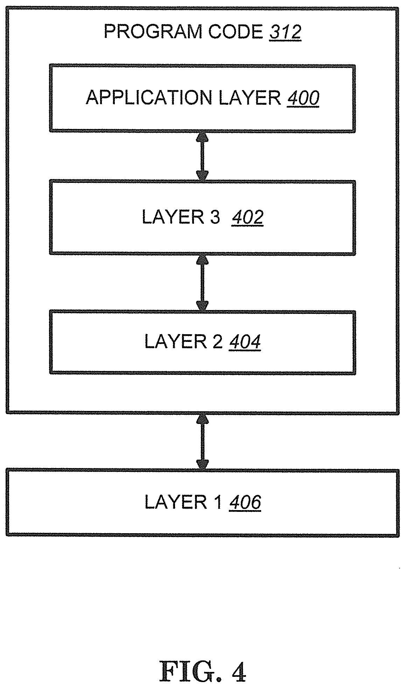

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP SP-110638 proposes a new study item on proximity-based services (ProSe). The justification and objective of the study item are described in 3GPP SP-110638 as follows:

### 3 Justification

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

### 4 Objective

The objective is to study use cases and identify potential requirements for an operator network controlled discovery and communications between devices that are in proximity, under continuous network control, and are under a 3GPP network coverage, for:
1. Commercial/social use
2. Network offloading
3. Public Safety
4. Integration of current infrastructure services, to assure the consistency of the user experience including reachability and mobility aspects

Additionally, the study item will study use cases and identify potential requirements for 5.
Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.

The study does not apply to GERAN or UTRAN.

Furthermore, 3GPP TR 22.803-100 captures the feasibility study for proximity-based services (ProSe). 3GPP TR 22.803-100 defines a ProSe discovery, which contains an open ProSe discovery and a restricted ProSe discovery, as follows:

### 3.1 Definitions

**ProSe Discovery:** a process that identifies that a UE is in proximity of another, using E-UTRA.

**Open [ProSe] Discovery:** is ProSe Discovery without explicit permission from the UE being discovered.

**Restricted [ProSe] Discovery:** is ProSe Discovery that only takes place with explicit permission from the UE being discovered.

In addition, U.S. Patent Publication No. 2011/0268101 discloses a method for transmission and reception of proximity detection signal for peer discovery. More specifically, Paragraph [0043] and [0067] of U.S. Patent Publication No. 2011/0268101 describe one method of implementing proximity detection signal. Additional details about the proximity detection signal are available in U.S. Patent Publication No. 2011/0268101.

U.S. Provisional Application Serial No. 61/705734 also discloses and provides in summary a method for transmission and reception of a proximity detection signal for restricted ProSe discovery as follows:
To fulfill a restricted ProSe discovery, a field can be included in a proximity detection signal to indicate it is a restricted ProSe discovery. When receiving a proximity detection signal with the field indicating a restricted ProSe discovery, the UE determines if this signal was transmitted by another UE used by a friend by matching the UE/user identity included in the proximity detection signal with entities in a friend list (e.g. a phonebook) maintained in the UE or in an application running in the UE. If the signal was transmitted by another UE used by a friend, the UE is allowed to further apply the information included in the proximity detection signal e.g. the application may notify the user of discovering a friend and the user can then initiate a communication with the friend.

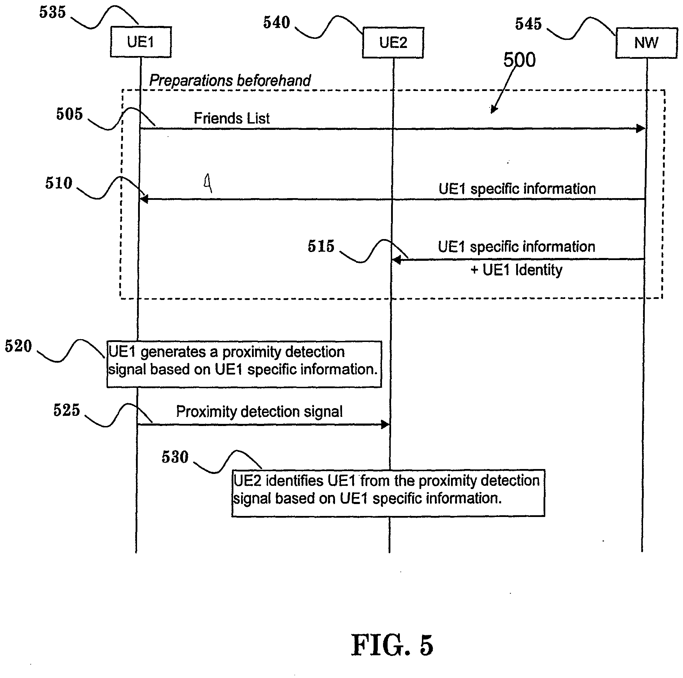

Additional details about the method for transmission and reception of a proximity detection signal for restricted ProSe discovery are available in U.S. Provisional Application Serial No. 61/705734. U.S. Provisional Application Serial No. 61/705734 discloses"if a match is found for UE 120x, then directory agent 140 may send a notification of the match to UE 120x (step 4a). Directory agent 140 may also notify UE 120y, which may be part of the match for UE 120x (step 4b). The match notifications may inform UEs 120x and 120y to initiate peer discovery, if needed. The match notifications may also convey resources and/or other parameters to use for peer discovery. UEs 120x and 120y may perform peer discovery in response to receiving the match notifications from directory agent 140. For peer discovery, UE 120x may transmit a proximity detection signal to indicate its presence (step 5), and UE 120y may detect the proximity detection signal from UE 120x (step 6). Additionally or alternatively, UE 120y may transmit a proximity detection signal to indicate its presence (step 7), and UE 120x may detect the proximity detection signal from UE 120y (step 8)" and "FIG. 5 shows a design of a proximity detection signal generated based on the PUSCH. In this design, the peer detection signal may include a proximity detection reference signal (PD-RS) and a data portion, which may be referred to as a proximity detection PUSCH (PD-PUSCH). In one design, the PD-RS may occupy resource elements normally occupied by a demodulation reference signal (DMRS) for the PUSCH, and the PD-PUSCH may occupy the remaining resource elements for the PUSCH. In the design shown in FIG. 5, the PD-RS may occupy the middle symbol period of each slot (or symbol periods 3 and 10 for the normal cyclic prefix), and the PD-PUSCH may occupy the remaining symbol periods in the subframe (or symbol periods 0-2, 4-9, and 11-13). A PD-RS is a reference signal that may be used for coherent detection of the PD-PUSCH. The PD-PUSCH may carry information for the proximity detection signal, e.g., identification information such as a UE identity (ID) of a UE transmitting the proximity detection signal, service information indicative of service(s) requested by the UE and/or service(s) offered by the UE, location information indicative of the location of the UE, and/or other information".

In general, U.S. Provisional Application Serial No. 61/705734 discloses a very simple method for transmission and reception of a proximity detection signal used for restricted ProSe discovery. Basically, U.S. Provisional Application Serial No. 61/705734 proposes that UE1 includes a field in the proximity detection signal to indicate that the proximity detection signal is for a restricted ProSe discovery. Then, the discovery would rely on UE2, which receives the proximity detection signal, to determine whether UE2 is allowed to discover UE1 by matching a UE identity included in the proximity detection signal with entities in a friend list (such as a phonebook) maintained in UE2. If the UE identity is not in the friend list, UE2 would not be allowed to discover UE1. Since the UE identity of UE2 is explicitly included in the proximity detection signal, the method disclosed in U.S. Provisional Application Serial No. 61/705734 provides poor user privacy because the UE identity of UE2 is recognizable to people. Under the circumstances, further improvements on user privacy should be considered.

Instead of explicitly including a recognizable UE identity in a proximity detection signal for restricted ProSe discovery, a potential way to improve user privacy is to have UE1 generate the proximity detection signal using a UE1-specific information and to provide this UE1 specific information to UE2, which is permitted to discover UE2, so that UE2 could identify UE1. In other words, only the UEs, which are given and have the UE1-specific information, could identify UE1 from the received proximity detection signal. Thus, improved user privacy could be ensured. In one embodiment, the UE-specific information could be a specific bit string or a temporary UE identity which is allocated by the network and is unrecognizable to other UEs.

FIG. 5 is a message sequence chart 500 that provides a general outline of steps in accordance with one exemplary embodiment. In step 505, UE1 535 provides a list of friends, who are permitted to discover UE1, to the network. In one embodiment, step 505 may be done when UE1 535 activates the ProSe discovery feature or when offline via the Internet. In step 510, the network 545 allocates and sends a UE1-specific information to UE1, which could be used by UE1 535 to generate the proximity detection signal. In one embodiment, step 510 could be done when UE1 535 activates the ProSe discovery feature or via over-the-air (OTA) device management. Furthermore, it would possible to update the UE1-specific information when necessary.

In step 515, the network 545 provides the UE1-specific information to UE2 540, which is in the list of friends of UE1 535. Together with the UE1-specific information, an identity of UE1 (such as the mobile phone number of UE1) should also be provided to UE2 540 so that UE2 540 can establish the link between UEl-specific information and UE1 identity. In one embodiment, step 515 could be done when UE2 540 activates the ProSe discovery feature. Furthermore, an additional constraint (such as) for the network to provide the information should be considered. An example of the constraint is whether UE2 540 is close to UE1 535 (or whether both UE1 535 and UE2 540 are in the same cell or the same Timing Advance or TA). When UE1 535 and UE2 540 are close or are in the same cell or TA, unnecessary signaling could be avoided. In addition, it would be possible for the network 545 to perform step 515 through over-the-air (OTA) device management. In one embodiment, steps 505, 510, and 515 should be finished before ProSe discovery is performed.

UE1 535 generates a proximity detection signal in step 520 using the UE1 specific information and transmits the signal in step 525. In one embodiment, a potential method for generating the signal is to have UE1 535 sets the content of the proximity detection signal and attaches a CRC (Cyclic Redundancy Check) to the content. Furthermore, UE1 could scramble the CRC with the UE1-specific information, similar to PDCCH (Physical Downlink Control Channel) CRC scrambling with C-RNTI (Cell Radio Network Temporary Identifier) in LTE as described in 3GPP TS 36.213 V10.4.0.

In step 530, UE2 540 receives and processes the proximity detection signal using the UE1-specific information to identify UE1 535. In one embodiment, UE2 540 would descramble the CRC of the received proximity detection signal using the UE1-specific information. If there is no CRC error, UE2 540 would consider the identification of UE1 535 to be successful.

In one embodiment, the proximity detection signal could contain a field of UE identity that could be set to a special value to indicate a restrict ProSe discovery. If the field of UE identity is set to a value other than the special value, the ProSe discovery would be an open ProSe discovery, and the field of UE identity would indicate the identity of the UE that transmitted the proximity detection signal.

Referring back to FIGs. 3 and 4, in one embodiment, the device 300 could include a program code 312 stored in memory 310 to implement a method for transmitting a proximity detection signal for restricted ProSe discovery. In one embodiment, the CPU 308 could execute the program code 312 to enable a first UE (i) to provide a friends list to a network, wherein the friends list includes UEs that are permitted to discover the first UE, (ii) to receive a UE-specific information allocated for the first UE, and (iii) to generate and transmit the proximity detection signal according to the UE-specific information.

Alternatively, the device 300 could include a program code 312 stored in memory 310 to implement a method for detecting a proximity detection signal for restricted ProSe discovery. In one embodiment, the CPU 308 could execute the program code 312 to enable a second UE (i) to receive from a network a UE-specific information of a first UE, (ii) to receive a proximity detection signal for restricted proximity discovery, and (iii) to process the proximity detection signal using the UE-specific information of the first UE to identify the first UE.

In addition, the device 300 could include a program code 312 stored in memory 310 to coordinate ProSe discovery. In one embodiment, the CPU 308 could execute the program code 312 to enable a network (i) to receive a friends list from a first UE, wherein the friends list includes UEs that are permitted to discover the first UE, (ii) to allocate a UE-specific information for the first UE and provides the UE-specific information to the first UE so that the first UE could use the UE-specific information to generate the proximity detection signal, and (iii) to deliver the UE-specific information of the first UE to a second UE in the friends list so that the second UE could use the UE-specific information to process the proximity detection signal to identify the first UE.

In addition, the CPU 308 could execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications.

## Claims

1. A method for transmitting a proximity detection signal for restricted Proximity-based Service, in the following also referred to as ProSe, discovery, comprising:
- a first User Equipment, in the following also referred to as UE, (535) provides (505) a friends list to a network (545), wherein the friends list includes UEs that are permitted to discover the first UE (535) ;
- the first UE (535) receives (510) a UE-specific information allocated for the first UE (535) from the network, wherein the UE-specific information is information specific to the first UE; and
- the first UE (535) generates (520) and transmits (525) the proximity detection signal according to the UE-specific information.

2. The method of claim 1, wherein the first UE (535) generates the proximity detection signal as follows:
(i) the first UE (535) sets a content of the proximity detection signal;
(ii) the first UE (535) attaches a cyclic redundancy check, in the following also referred to as CRC, to the content; and
(iii) the first UE (535) scrambles the CRC with the UE-specific information.

3. A method for detecting a proximity detection signal for restricted Proximity-based Service, in the following also referred to as ProSe, discovery, comprising:
- a second User Equipment, in the following also referred to as UE, (540) receives from a network (545) a UE-specific information of a first UE (535), wherein the UE-specific information of the first UE is information specific to the first UE (535) and has been allocated by the network for the first UE;
- the second UE (540) receives (515) a proximity detection signal for restricted proximity discovery, wherein the proximity detection signal for restricted proximity discovery is generated and transmitted by the first UE according to the UE-specific information of the first UE; and
- the second UE (540) processes (530) the proximity detection signal using the UE-specific information of the first UE (535) to identify the first UE (535), wherein the second UE forms part of a friends list provided by the first UE to the network, and the friends list includes UEs that are permitted to discover the first UE.

4. The method of claim 3, wherein the first UE (535) generates the proximity detection signal as follows:
(i) the first UE (535) sets a content of the proximity detection signal;
(ii) the first UE (535) attaches a cyclic redundancy check, in the following also referred to as CRC, to the content; and
(iii) the first UE (535) scrambles the CRC with the UE-specific information.

5. The method of claim 3 or 4, wherein the second UE (540) processes the proximity detection signal to identify the first UE (535) as follows:
(i) the second UE (540) de-scrambles the CRC of the proximity detection signal with the UE- specific information of the first UE (535); and
(ii) the second UE (540) considers the identification of the first UE (535) to be successful if no CRC error is detected.

6. A method for coordinating restricted Proximity-based Service, in the following also referred to as ProSe, discovery using a proximity detection signal, comprising:
- a network (545) receives a friends list from a first User Equipment, in the following also referred to as UE, (535) wherein the friends list includes UEs that are permitted to discover the first UE (535);
- the network (545) allocates a UE-specific information for the first UE (535), wherein the UE-specific information is information specific to the first UE, and provides (510) the UE-specific information to the first UE (535) so that the first UE (535) could use the UE-specific information to generate the proximity detection signal; and
- the network (545) delivers (515) the UE-specific information of the first UE (535) to a second UE (540) in the friends list so that the second UE (540) could use the UE-specific information to process the proximity detection signal to identify the first UE (535).

7. The method of claim 6, wherein the first UE (535) generates the proximity detection signal as follows:
(i) the first UE (535) sets a content of the proximity detection signal;
(ii) the first UE (535) attaches a cyclic redundancy check, in the following also referred to as CRC, to the content; and
(iii) the first UE (535) scrambles the CRC with the UE-specific information.

8. The method of claim 6 or 7, wherein the second UE (540) processes the proximity detection signal to identify the first UE (535) as follows:
(i) the second UE (540) de-scrambles the CRC of the proximity detection signal with the UE-specific information of the first UE (535); and
(ii) the second UE (540) considers the identification of the first UE (535) to be successful if no CRC error is detected.

9. A communication device for transmitting a proximity detection signal for restricted Proximity-based Service, in the following also referred to as ProSe, discovery, the communication device comprising:
- a control circuit (306);
- a processor (308) installed in the control circuit (306);
- a memory (310) installed in the control circuit (306) and operatively coupled to the processor (308);
**characterized in that** the processor (308) is configured to execute a program code (312) stored in the memory (310) to perform the method of any of claims 1 and 2.

10. A communication device for detecting a proximity detection signal for restricted Proximity-based Service, in the following also referred to as ProSe, discovery, the communication device comprising:
- a control circuit (306);
- a processor (308) installed in the control circuit (306);
- a memory (310) installed in the control circuit (306) and operatively coupled to the processor (308);
**characterized in that** the processor (308) is configured to execute a program code (312) stored in the memory (310) to perform the method of any of claims 3 to 5.

11. A communication device for coordinating restricted Proximity-based Service, in the following also referred to as ProSe, discovery using a proximity detection signal, the communication device comprising:
- a control circuit (306);
- a processor (308) installed in the control circuit (306);
- a memory (310) installed in the control circuit (306) and operatively coupled to the processor (308);
**characterized in that** the processor (308) is configured to execute a program code (312) stored in the memory (310) to perform the method of any of claims 6 to 8.

## Patentansprüche

1. Verfahren zum Senden eines Umgebungserfassungssignals für eine Erkennung eines eingeschränkten umgebungsbasierten Diensts, im Folgenden auch als ProSe bezeichnet, aufweisend:
- eine erste Teilnehmerausrüstung, im Folgenden auch als UE bezeichnet, (535) liefert (505) eine Freundesliste an ein Netzwerk (545), wobei die Freundesliste UEs umfasst, welchen erlaubt ist, die erste UE (535) zu erkennen;
- die erste UE (535) empfängt (510) UE-spezifische Informationen, die der ersten UE (535) zugewiesen sind, von dem Netzwerk, wobei die UE-spezifischen Informationen Informationen sind, die spezifisch für die erste UE sind; und
- die erste UE (535) generiert (520) und sendet (525) das Umgebungserfassungssignal gemäß den UE-spezifischen Informationen.

2. Verfahren gemäß Anspruch 1, wobei die erste UE (535) das Umgebungserfassungssignal wie folgt generiert:
(i) die erste UE (535) legt einen Inhalt des Umgebungserfassungssignals fest;
(ii) die erste UE (535) hängt eine zyklische Redundanz-Prüfung, im Folgenden auch als CRC bezeichnet, an den Inhalt an; und
(iii) die erste UE (535) verschlüsselt die CRC mit den UE-spezifischen Informationen.

3. Verfahren zum Erfassen eines Umgebungserfassungssignals für eine Erkennung eines eingeschränkten umgebungsbasierten Diensts, im Folgenden auch als ProSe bezeichnet, aufweisend:
- eine zweite Teilnehmerausrüstung, im Folgenden auch als UE bezeichnet, (540) empfängt von einem Netzwerk (545) UE-spezifische Informationen einer ersten UE (535), wobei die UE-spezifischen Informationen der ersten UE Informationen sind, die spezifisch für die erste UE (535) sind und der ersten UE durch das Netzwerk zugewiesen worden sind;
- die zweite UE (540) empfängt (515) ein Umgebungserfassungssignal für eine eingeschränkte Umgebungserkennung, wobei das Umgebungserfassungssignal für die eingeschränkte Umgebungserkennung durch die erste UE gemäß den UE-spezifischen Informationen der ersten UE generiert und gesendet wird; und
- die zweite UE (540) verarbeitet (530) das Umgebungserfassungssignal unter Verwendung der UE-spezifischen Informationen der ersten UE (535), um die erste UE (535) zu identifizieren, wobei die zweite UE einen Teil einer Freundesliste bildet, die durch die erste UE an das Netzwerk bereitgestellt wird, und die Freundesliste UEs aufweist, welchen erlaubt ist, die erste UE zu erkennen.

4. Verfahren gemäß Anspruch 3, wobei die erste UE (535) das Umgebungserfassungssignal wie folgt generiert:
(i) die erste UE (535) legt einen Inhalt des Umgebungserfassungssignals fest;
(ii) die erste UE (535) hängt eine zyklische Redundanz-Prüfung, im Folgenden auch als CRC bezeichnet, an den Inhalt an; und
(iii) die erste UE (535) verschlüsselt die CRC mit den UE-spezifischen Informationen.

5. Verfahren gemäß Anspruch 3 oder 4, wobei die zweite UE (540) das Umgebungserfassungssignal wie folgt verarbeitet, um die erste UE (535) zu identifizieren:
(i) die zweite UE (540) entschlüsselt die CRC des Umgebungserfassungssignals mit den UE-spezifischen Informationen der ersten UE (535); und
(ii) die zweite UE (540) betrachtet die Identifikation der ersten UE (535) als erfolgreich, wenn kein CRC-Fehler festgestellt wird.

6. Verfahren zum Koordinieren einer Erkennung eines eingeschränkten umgebungsbasierten Diensts, im Folgenden auch als ProSe bezeichnet, unter Verwendung eines Umgebungserfassungssignals, aufweisend:
- ein Netzwerk (545) empfängt eine Freundesliste von einer ersten Teilnehmerausrüstung, im Folgenden auch als UE bezeichnet, (535), wobei die Freundesliste UEs aufweist, welchen erlaubt ist, die erste UE (535) zu erkennen;
- das Netzwerk (545) weist UE-spezifische Informationen für die erste UE (535) zu, wobei die UE-spezifischen Informationen Informationen sind, die spezifisch für die erste UE sind, und liefert (510) die UE-spezifischen Informationen an die erste UE (535), sodass die erste UE (535) die UE-spezifischen Informationen verwenden könnte, um das Umgebungserfassungssignal zu generieren; und
- das Netzwerk (545) liefert (515) die UE-spezifischen Informationen der ersten UE (535) an eine zweite UE (540) in der Freundesliste, sodass die zweite UE (540) die UE-spezifischen Informationen verwenden könnte, um das Umgebungserfassungssignal zu verarbeiten, um die erste UE (535) zu identifizieren.

7. Verfahren gemäß Anspruch 6, wobei die erste UE (535) das Umgebungserfassungssignal wie folgt generiert:
(i) die erste UE (535) legt einen Inhalt des Umgebungserfassungssignals fest;
(ii) die erste UE (535) hängt eine zyklische Redundanz-Prüfung, im Folgenden auch als CRC bezeichnet, an den Inhalt an; und
(iii) die erste UE (535) verschlüsselt die CRC mit den UE-spezifischen Informationen.

8. Verfahren gemäß Anspruch 6 oder 7, wobei die zweite UE (540) das Umgebungserfassungssignal wie folgt verarbeitet, um die erste UE (535) zu identifizieren:
(i) die zweite UE (540) entschlüsselt die CRC des Umgebungserfassungssignals mit den UE-spezifischen Informationen der ersten UE (535); und
(ii) die zweite UE (540) betrachtet die Identifikation der ersten UE (535) als erfolgreich, wenn kein CRC-Fehler festgestellt wird.

9. Kommunikationsvorrichtung zum Senden eines Umgebungserfassungssignals für eine Erkennung eines eingeschränkten umgebungsbasierten Diensts, im Folgenden auch als ProSe bezeichnet, wobei die Kommunikationsvorrichtung aufweist:
- eine Steuerschaltung (306);
- einen Prozessor (308), der in der Steuerschaltung (306) installiert ist;
- einen Speicher (310), der in der Steuerschaltung (306) installiert und betriebsbereit mit dem Prozessor (308) verbunden ist;
**dadurch gekennzeichnet, dass** der Prozessor (308) eingerichtet ist, einen Programm-Code (312), der in dem Speicher (310) gespeichert ist, auszuführen, um das Verfahren gemäß einem der Ansprüche 1 und 2 auszuführen.

10. Kommunikationsvorrichtung zum Erfassen eines Umgebungserfassungssignals für eine Erkennung eines eingeschränkten umgebungsbasierten Diensts, im Folgenden auch als ProSe bezeichnet, wobei die Kommunikationsvorrichtung aufweist:
- eine Steuerschaltung (306);
- einen Prozessor (308), der in der Steuerschaltung (306) installiert ist;
- einen Speicher (310), der in der Steuerschaltung (306) installiert und betriebsbereit mit dem Prozessor (308) verbunden ist;
**dadurch gekennzeichnet, dass** der Prozessor (308) eingerichtet ist, einen Programm-Code (312), der in dem Speicher (310) gespeichert ist, auszuführen, um das Verfahren gemäß einem der Ansprüche 3 bis 5 auszuführen.

11. Kommunikationsvorrichtung zum Koordinieren einer Erkennung eines eingeschränkten umgebungsbasierten Diensts, im Folgenden auch als ProSe bezeichnet, unter Verwendung eines Umgebungserfassungssignals, wobei die Kommunikationsvorrichtung aufweist:
- eine Steuerschaltung (306);
- einen Prozessor (308), der in der Steuerschaltung (306) installiert ist;
- einen Speicher (310), der in der Steuerschaltung (306) installiert und betriebsbereit mit dem Prozessor (308) verbunden ist;
**dadurch gekennzeichnet, dass** der Prozessor (308) eingerichtet ist, einen Programm-Code (312), der in dem Speicher (310) gespeichert ist, auszuführen, um das Verfahren gemäß einem der Ansprüche 6 bis 8 auszuführen.

## Revendications

1. Procédé de transmission d'un signal de détection de proximité pour une découverte limitée de Service de Proximité, ci-après également appelé ProSe, comprenant le fait :
- de fournir (505), par le biais d'un premier Équipement Utilisateur, ci-après également appelé UE, (535), une liste d'amis à un réseau (545), où la liste d'amis comporte des UE qui sont autorisés à découvrir le premier UE (535) ;
- de recevoir (510), par le biais du premier UE (535), des informations spécifiques à un UE attribuées au premier UE (535) à partir du réseau, où les informations spécifiques à un UE sont des informations spécifiques au premier UE ; et
- de générer (520) et de transmettre (525), par le biais du premier UE (535), le signal de détection de proximité en fonction des informations spécifiques à un UE.

2. Procédé de la revendication 1, dans lequel le premier UE (535) génère le signal de détection de proximité comme suit :
(i) le premier UE (535) établit un contenu du signal de détection de proximité ;
(ii) le premier UE (535) associe un contrôle par redondance cyclique, ci-après également appelé CRC, au contenu ; et
(iii) le premier UE (535) embrouille le CRC avec les informations spécifiques à un UE.

3. Procédé de détection d'un signal de détection de proximité pour une découverte limitée de Service de Proximité, ci-après également appelé ProSe, comprenant le fait :
- de recevoir, par le biais d'un deuxième Équipement Utilisateur, ci-après également appelé UE, (540), à partir d'un réseau (545), des informations spécifiques à un UE d'un premier UE (535), où les informations spécifiques à un UE du premier UE sont des informations spécifiques au premier UE (535) et ont été attribuées par le réseau au premier UE ;
- de recevoir (515), par le biais du deuxième UE (540), un signal de détection de proximité pour une découverte de proximité limitée, où le signal de détection de proximité pour une découverte de proximité limitée est généré et transmis par le premier UE en fonction des informations spécifiques à un UE du premier UE ; et
- de traiter (530), par le biais du deuxième UE (540), le signal de détection de proximité en utilisant les informations spécifiques à un UE du premier UE (535) pour identifier le premier UE (535), où le deuxième UE fait partie d'une liste d'amis fournie par le premier UE au réseau, et la liste d'amis comporte des UE qui sont autorisés à découvrir le premier UE.

4. Procédé de la revendication 3, dans lequel le premier UE (535) génère le signal de détection de proximité comme suit :
(i) le premier UE (535) établit un contenu du signal de détection de proximité ;
(ii) le premier UE (535) associe un contrôle par redondance cyclique, ci-après également appelé CRC, au contenu ; et
(iii) le premier UE (535) embrouille le CRC avec les informations spécifiques à un UE.

5. Procédé de la revendication 3 ou 4, dans lequel le deuxième UE (540) traite le signal de détection de proximité pour identifier le premier UE (535) comme suit :
(i) le deuxième UE (540) désembrouille le CRC du signal de détection de proximité avec les informations spécifiques à un UE du premier UE (535) ; et
(ii) le deuxième UE (540) considère que l'identification du premier UE (535) est réussie si aucune erreur CRC n'est détectée.

6. Procédé de coordination d'une découverte limitée de Service de Proximité, ci-après également appelé ProSe, en utilisant un signal de détection de proximité, comprenant le fait :
- de recevoir, par le biais d'un réseau (545), une liste d'amis à partir d'un premier Équipement Utilisateur, ci-après également appelé UE, (535), où la liste d'amis comporte des UE qui sont autorisés à découvrir le premier UE (535) ;
- par le biais du réseau (545), d'attribuer des informations spécifiques à un UE au premier UE (535), où les informations spécifiques à un UE sont des informations spécifiques au premier UE, et de fournir (510) les informations spécifiques à un UE au premier UE (535) de sorte que le premier UE (535) puisse utiliser les informations spécifiques à un UE pour générer le signal de détection de proximité ; et
- de transférer (515), par le biais du réseau (545), les informations spécifiques à un UE du premier UE (535) à un deuxième UE (540) dans la liste d'amis de sorte que le deuxième UE (540) puisse utiliser les informations spécifiques à un UE pour traiter le signal de détection de proximité pour identifier le premier UE (535).

7. Procédé de la revendication 6, dans lequel le premier UE (535) génère le signal de détection de proximité comme suit :
(i) le premier UE (535) établit un contenu du signal de détection de proximité ;
(ii) le premier UE (535) associe un contrôle par redondance cyclique, ci-après également appelé CRC, au contenu ; et
(iii) le premier UE (535) embrouille le CRC avec les informations spécifiques à un UE.

8. Procédé de la revendication 6 ou 7, dans lequel le deuxième UE (540) traite le signal de détection de proximité pour identifier le premier UE (535) comme suit :
(i) le deuxième UE (540) désembrouille le CRC du signal de détection de proximité avec les informations spécifiques à un UE du premier UE (535) ; et
(ii) le deuxième UE (540) considère que l'identification du premier UE (535) est réussie si aucune erreur CRC n'est détectée.

9. Dispositif de communication pour transmettre un signal de détection de proximité pour une découverte limitée de Service de Proximité, ci-après également appelé ProSe, le dispositif de communication comprenant :
- un circuit de commande (306) ;
- un processeur (308) installé dans le circuit de commande (306) ;
- une mémoire (310) installée dans le circuit de commande (306) et couplée de manière fonctionnelle au processeur (308) ;
**caractérisé en ce que** le processeur (308) est configuré pour exécuter un code de programme (312) stocké dans la mémoire (310) pour effectuer le procédé de l'une des revendications 1 et 2.

10. Dispositif de communication pour détecter un signal de détection de proximité pour une découverte limitée de Service de Proximité, ci-après également appelé ProSe, le dispositif de communication comprenant :
- un circuit de commande (306) ;
- un processeur (308) installé dans le circuit de commande (306) ;
- une mémoire (310) installée dans le circuit de commande (306) et couplée de manière fonctionnelle au processeur (308) ;
**caractérisé en ce que** le processeur (308) est configuré pour exécuter un code de programme (312) stocké dans la mémoire (310) pour effectuer le procédé de l'une des revendications 3 à 5.

11. Dispositif de communication pour coordonner une découverte de Service de Proximité, ci-après également appelé ProSe, en utilisant un signal de détection de proximité, le dispositif de communication comprenant :
- un circuit de commande (306) ;
- un processeur (308) installé dans le circuit de commande (306) ;
- une mémoire (310) installée dans le circuit de commande (306) et couplée de manière fonctionnelle au processeur (308) ;
**caractérisé en ce que** le processeur (308) est configuré pour exécuter un code de programme (312) stocké dans la mémoire (310) pour effectuer le procédé de l'une des revendications 6 à 8.
